# EUROPEAN PATENT SPECIFICATION

(11) **EP 0 300 638 B1**
(45) Date of publication and mention of the grant of the patent: **09.06.1993**
(21) Application number: 88306163.2
(22) Date of filing: 06.07.1988
(51) Int. Cl.: C08F 10/08, C08F 4/64

(54) **A process for preparing highly crystalline Poly-1-butene and the catalyst used in the process**
Verfahren zur Herstellung vom Hochkristallinem Poly-1-buten und in diesen Verfahren anzuwendender Katalysator
Procédé pour préparer poly-1-butène hautement cristallin et catalysateur utilisé dans ce procédé

(30) Priority: 15.07.1987 FI 873129
(43) Date of publication of application: 25.01.1989
(73) Proprietor: NESTE OY, SF-06850 Kulloo (FI); IDEMITSU PETROCHEMICAL COMPANY LIMITED, Ichihara Chiba, 299-01 (JP)
(72) Inventor: Tervonen, Jari, SF-06100 Porvoo (FI); Salminen, Hannu, SF-06150 Porvoo (FI); Suurmäki, Sirkka-Liisa, SF-06650 Hamari (FI); Söderberg, Tarja, SF-06400 Porvoo (FI)
(74) Representative: Browne, Robin Forsythe, Dr.

(56) References cited:
- EP-A- 0 146 058
- US-A- 3 489 732
- PATENT ABSTRACTS OF JAPAN, vol. 4, no. 182 (C-35)[664], 16th December 1980

## Description

The invention relates to a method for preparing a 1-butene polymer, which is a homopolymer, or a copolymer containing 1-butene units and less than 10% of units derived from other unsaturated monomers, wherein 1-butene or its mixture with other monomers is, in the presence of an electron donor and optionally hydrogen, polymerized in gas phase by means of a Ziegler-Natta catalyst composition, which is obtained by prepolymerizing a premonomer with a combination of: a solid catalyst component supported on a MgCl₂ carrier and containing tetravalent titanium halide, an aluminium tri(C₁-C₁₀)-alkyl cocatalyst and a stereospecific electron donor having at least one hetero atom. The invention also relates to a catalyst composition suitable for the polymerization of 1-butene, which catalyst composition has been obtained by polymerizing a premonomer with a combination of: a solid catalyst component supported on a MgCl₂ carrier and conatining a tetravalent titanium halide; an aluminium tri(C₁-C₁₀)-alkyl cocatalyst; and a stereospecific electron donor having at least one hetero atom.

When preparing poly-1-butene, one tries to achieve large yields of a material having the form of easily manageable grains and being easily machinable, and the products of which have excellent mechanical and optical properties, among others. These properties are achieved mainly by means of an efficient, stereosspecific catalyst, which reproduces its useful structure in the polymer grains.

It is known in the field that 1-butene can be polymerized by means of such a Ziegler-Natta-catalyst system, which generally consists of the reaction product of a metal organic compound or a hydride of an element of group I-III and a transition metal compound of group IV-VIII.

The US patent specification 4 503 203 describes the polymerization of 1-butene in the gas phase under low monomer pressure. The product may contain less than 20 mole percent of another C₂-C₆-alphaolefinic unit such as a 1-butene unit and the polymer product obtained may contain up to 15% by weight of atactic polymer.

In example 1 an TiCl₃.1/3 AlGl₃ catalyst was used, whereby the chloride amount of the product was 2800 mg/kg, the portion of isotactic polymer in the product measured as the fraction insoluble in dibutyl ether, was 93.1%, and the bulk density was 0.29 g/cm³. In example 2, the chloride amount contained in the 1-butene/propenecopolymer prepared by means of a catalyst of the same type (2. 9% of propene) was 2900 mg/kg, the portion of isotactic polymer was 94.5% and the bulk density was 0.28 g/cm³.

It is equally known that the above properties can be improved by prepolymerizing a solid catalyst component with a small amount of olefin.

The US patent specification 3 562 357 discloses the preparation of 1-butene copolymer by using a catalyst composition based on titanic trichloride, diethylaluminiumchloride and diethylaluminiumiodide, whereby the copolymerization yield is improved by prepolymerizing a C₁₀-C₁₈-monoalphaolefin acting as comonomer by means of the above catalyst composition. The catalyst compositon is, however, of a low-yield and obviously non-stereospecific type.

The JP 55-127409 discloses the preparation of poly-1-butene with a high bulk density by means of a catalyst composition based on titanium trichloride and an organic aluminium compound, whereby the prepolymerization is performed by contacting the alphaolefin with said catalyst composition in the polymerization conditions. In this specification as well, a catalyst composition based on titanium trichloride is being used, which does not have stereospecificity or components increasing the yield.

The JP-61-151204 discloses the preparation of an even more crystalline and rigid poly-1-butene with a higher yield advantageously in the presence of a mixture catalyst based on titanium trichloride, whereby the said advantages are achieved by prepolymerizing alphaolefin or styrene monomer with the aid of the same mixture catalyst. This also concerns a low-yield catalyst composition based on titanium trichloride and an aluminium compound.

According to the JP patent application 55-123607, crystalline poly 1-butene is prepared, possessing a high bulk density and yielding a high slurry concentration, by first carrying out a prepolymerization with a small amount of alpha-olefin in the presence of a catalyst composition comprising the reaction product of a magnesium compound, a titanium compound and an electron donor, as well as an organometallic compound of an element of group III. This process uses a high-yield catalyst composition based e.g. on tetravalent titanium, including components increasing the yield and possibly the stereospecificity. Ethene and 1-butene are mentioned as examples of monomers used in the prepolymerization.

The purpose of the invention is to produce a highly crystalline poly-1-butene formed of round grains and easy to handle, of which the above properties are improved, a method for preparing it with an increased yield and a more efficient catalyst for its preparation. Thus the invention is mainly characterized in what is being stated in the characterizing part of the claims.

Thus, it has now been discovered that the prepolymerization is particularly successful when an unsaturated hydrocarbon containing 5-12 carbon atoms is used as a monomer, which is liquid at room temperature, or mixtures of such monomers. Preferred compounds are styrene and 4-methyl-1-pentene. The carbon chain of the monomer may be even longer, however the polymer thus formed begins to dissolve in the medium.

The prepolymerization may be carried out either in the monomer medium, or in a mixture of the monomer and an inert solvent, in which for instance propane, butane, pentane, heptane or some other C₃-C₁₂ alkane serves as a medium. The catalyst system comprises a solid component (A) containing tetravalent titamium halide, a cocatalyst component (B) containing a specific organic Al compound and a stereospecific compound (C) containing a heteroatom or atoms, which is an electron donor.

The catalyst component A containing tetravalent titanium halide is a tetravalent titanium halide supported on a solid MgCl₂ carrier. MgCl₂ may be a directly commercially available product, which can be mechanically activated e.g. by grinding, or it may be prepared by starting from an organic Mg compound, which is converted into active MgCl₂ by catalytic chlorination. The chlorination of dialkylmagnesium is described for instance in the EP patent specification 198 151 (Neste Oy). A Ti compound, in which the titanium is at a tetravalent oxidation degree, e.g. a compound according to the following formula, has provided suitable as titanium compound:

Ti(OR)₄₋ₙxₙ

in which R is an alkyl group, having 1-6 C atoms, X is a halogen like Cl, Br, I. and n is an integral 1-4. Titaniumtetrahalides, particularly TiCl₄, are advantageous. All the above compounds may be used alone or as mixtures.

The cocatalyst compound B is an aluminium trialkyl having the following formula:

AlR'₃

in which R' is an alkyl group, having 1-10 C atoms.

Trimethylaluminium, triethylaluminium, tri-isopropylaluminium, tri-isobutylaluminium, and trioctylaluminium may be mentioned as suitable aluminium compounds. Among these, triethylaluminium and triisobutylaluminium are recommendable.

According to the invention, the electron donor C may be a compound comprising a heteroatom or atoms, which may have cyclic groups or open chains. The heterocyclic compounds according to the following formula have proved advantageous: 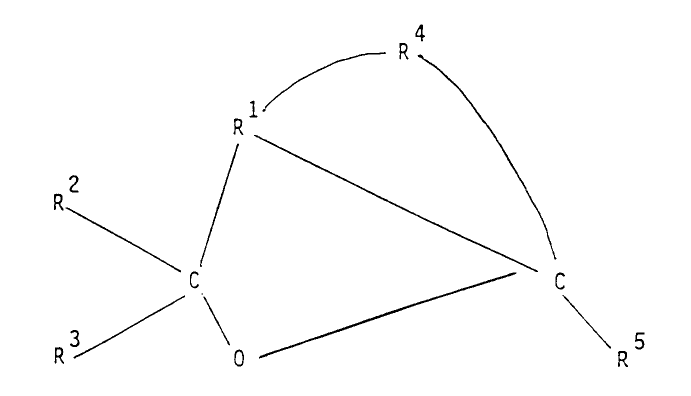
in which R¹ and R⁴ signify independently a hydrocarbon group, having advantageously 2-5 C-atoms, and R², R³ and R⁵ are each a hydrogen atom or a hydrocarbon group having advantageously 2-5 C-atoms. Specially advantageous heterocyclic compounds are cineoles, e.g. 1.4-, 1.8- and m-cineole. The electron donor may consequently also be a heterocompound of another kind, like a silicon compound, whereby arylalkoxysilanes are advantageous, e.g. diphenyldimethoxysilane. All these donors may be used alone or as mixtures of two or several donors.

In the prepolymerization, monomer is used in such a proportion of the ponderal mass of the catalyst, that the weight ratio monomer/catalyst is 0.1-200, preferably 1-50. The amounts of the components A, B and C in the prepolymerization are such that the molar ratio of the aluminium contained in the component B and the component C is 1-500, and the molar ratio of the aluminium and the Ti halide contained in the component B is 0.1-500, preferably 0.5-200. The prepolymerization may be performed also without the electron donor C.

The prepolymerization is carried out in conditions where the monomer used and the inert medium are in a liquid state. The prepolymerization period may be in the range of from 1 s to 30 min. and the temperature in the range from -20°C to +200°C.

After the prepolymerization the prepolymerized catalyst may be washed with some dissol vent having a low boiling point, whereby compounds B and C, possibly remaining unreacted, and prepolymerization monomer are discharged and the prepolymerized solid catalyst may be retained and later fed in a dry state into the polymerization reactor. It may also be fed directly into the polymerization reactor along with the prepolymerization components and 1-butene may be polymerized in the gas phase or the liquid phase, whereby the liquid phase is constituted of 1-butene or a mixture of 1-butene and some inert medium, generally an alkane.

In the process of the present invention, the actual polymerization of 1-butene is carried out by means of a catalyst composition prepolymerized in the manner described above, in which the catalyst components A, B and C as well as the prepolymerized polymer of the catalyst thus are present. When prepolymerizing, the amounts of the components A, B and C are such that the molar ratio of the aluminium contained in the component B and the electron donor C containing heteroatoms is 1-500, and the molar ratio of this aluminium and the Ti halide contained in the component A is 0.1-500, preferably 0.5-200.

The polymerization may be carried out in conditions where the 1-butene monomer is in a gaseous form. The temperature is then in the range of +35 - +75°C, preferably +50 - +65°C. The partial pressure of the 1-butene in the polymerization is adjusted depending on the temperature. At a temperature below +35°C the partial pressure of 1-butene cannot be sufficiently raised in order to achieve a sufficient polymerizing activity, as there is a risk of the 1-butene being liquefied. The product then also tends to agglomerate. The suitable partial pressure of 1-butene is 100-1500 kPa.

The polymerization temperature must not exceed a temperature of +75°C, since then the tendency of the polymer particles to adhere to each other and to the walls of the polymerizing equipment as well as to the possible agitator increases markedly. The ability of function of the catalyst also decreases as the temperature rises too much, thus reducing its ability of function.

A molecular weight regulator, such as hydrogen gas, may be present in the polymerization. Thus products having various melt flow properties for different purposes are handily obtained. It is possible to add hydrogen since the catalyst composition is not hydrogen sensitive, nor does the activity of the catalyst decrease as hydrogen is added, as it usually does, and the other properties of the product remain unchanged.

In the polymerization an inert gas may also be present, having a lower boiling point than 1-butene. Such gases are for instance nitrogen, methane, ethane and propane. Under the effect of the inert gas the agglomerating tendency of the polymer particles may be reduced. Also under the effect of the inert gas, the thermal energy generated in the exothermal polymerization reaction is easier to remove.

The prepolymerized catalyst according to the present invention (i.e. the entire catalyst composition) is easy to handle, since, being highly crystalline, it is very fluid (the catalyst particles do not tend to adhere to each other) and since it is mechanically stable. The catalyst obtained is also very active in the polymerization of 1-butene, and thus minor catalyst amounts need not to be removed from the prepared products. The corrosive action of the polymers on the machining equipment is insignificant owing to the low chloride concentration.

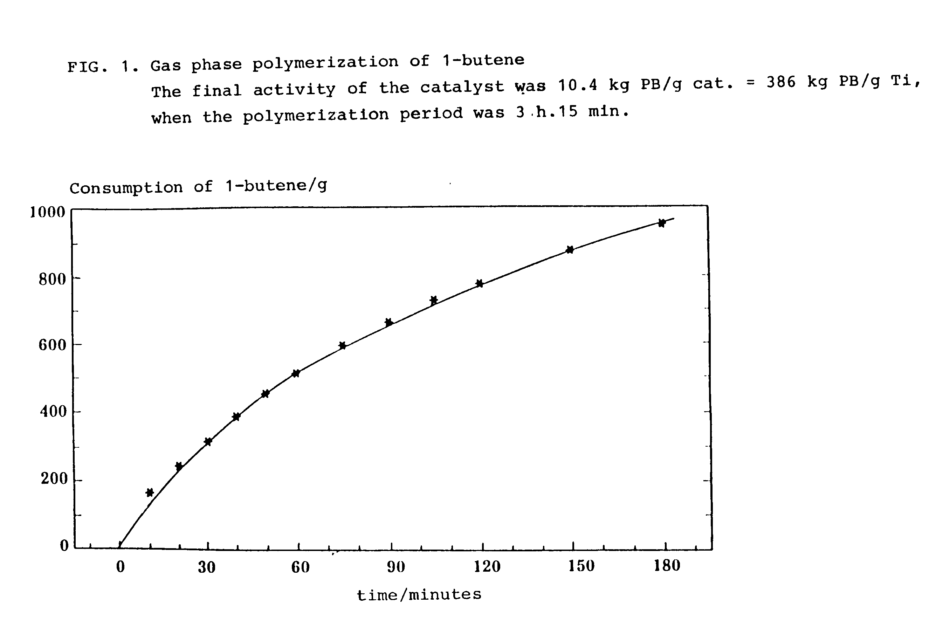

The activity of the catalyst is illustrated in figure 1, representing the consumption of 1-butene as a function of time when polymerizing 1-butene in the gas phase according to example 1.

The homo- or copolymer of 1-butene obtained with the polymerizing method of the invention is also very crystalline, and is obtained in the form of round particles which are easy to handle, very fluid and devoid of adhering tendencies. This circular shape and the fluidity is a great advantage especially when polymerizing in the gas phase.

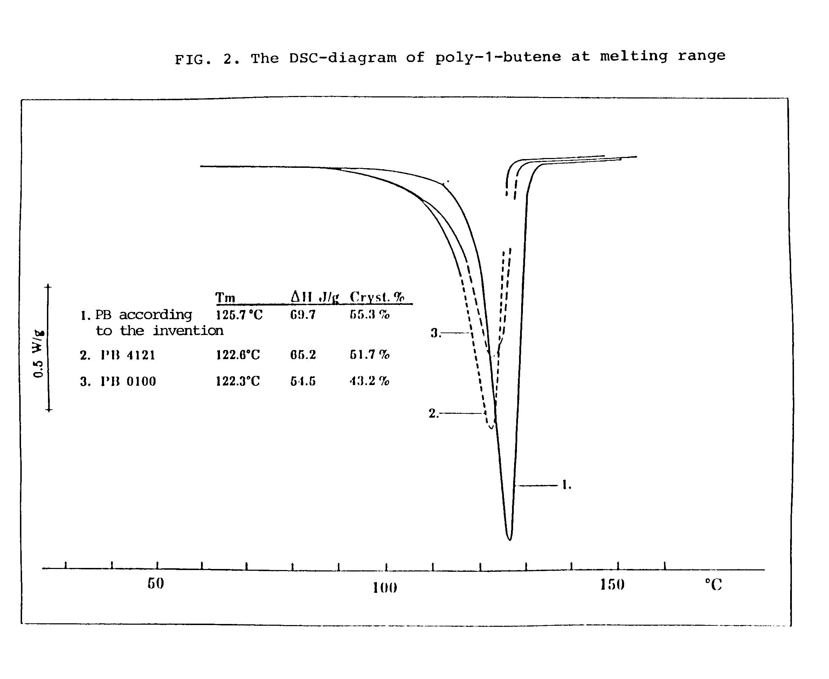

The crystallinity of poly-1-butene is illustrated in figure 2 by means of the DSC diagram compared to two commercial polybutenes, the PB 0100 made by Shell Company, a natural coloured universal quality to be used in mixtures, melt viscosity 0.4, and PB 4121, a black hotwater tube quality, melt viscosity 0.4, containing crystallinity increasing additives. Both reference polybutenes are homopolymers, prepared by solvent polymerization and from which the catalyst residues have been washed out. The figure shows that the polybutene of the invention is more crystalline and melts at a higher temperature than these commercial polymers.

Owing to the nucleation effect of the polymer prepolymerized into the catalyst and having a high melting point, the product has an increased crystallinity, and consequently its hardness, elastic module, tensile strength and yield point have increased compared to a product that has not been polymerized by using a prepolymerized catalyst. The mechanical properties of the polymer are excellent, and owing to its rapid crystallization it is very suitable among others for the manufacture of tubes, films and fibres by means of extrusion. Because of this nucleation effect the size of the crystalline spherulites is very small. Thus the optical properties of the product have improved; the light transmission, i.e. the transparency, has improved. The small size of the spherulites also results in improved mechanical properties, such as the elongation at break and impact strength grow.

The above nucleation effect is very evenly distributed over the entire product, and hence also the mechanical tension is evenly distributed, and no local stress centres are generated.

Out of the polymer of the present invention, which thus has been polymerized by means of the prepolymerized catalyst composition of the invention, object-like products can be rapidly produced by injection moulding, owing to the high crystallinity value and the rapid crystallization. Owing to the phenomenon described above, the cooling effect and duration may be reduced and thus the production cycle may be shortened, thus achieving a higher yield.

The bulk density of the product is high, so that the polymer produced by polymerization in the gas phase is easily dispersed in the gaseous state. In this respect, the fluidity, stability and lacking adhesiveness to each other and the various parts of the reactor are great advantages of the polymer.

The stereoregularity of the polymer of the invention is excellent, so that the product can be brought into subsequent treatment after the polymerization without removing a product having objectionable (atactic) stereoregularity.

The high crystallinity and stability of this polymer and the consequent favourable processing properties result from the specific regular spatial order of the polymer molecules, which, again, results from similar properties of the catalyst composition. A so-called replica effect occurs between the catalyst and the product, i.e. the catalyst structure is reproduced in the polymer product. This effect may be utilized when aiming at a specific end product by using an appropriate catalyst in addition to the operations connected with the various preparation processes.

The following examples 1 to 21 illustrate the invention. In these examples, the properties of the catalysts and polymers obtained are presented in table 1. The results of similar comparative polymerization tests 1 to 11 are presented in table 2.

### EXAMPLE 1

### 1. Carrying out the prepolymerization

1a. 40 ml of n-pentane dried on molecular sieves, 553.3 µl triisobutylaluminium (TIBA, the organic aluminium compound B) as well as 294.9 µl of 1.8 cineole (the stereospecific heterocompound C) were introduced into a glass bottle filled with inert gas (N₂). The amounts of the compounds B and C, 2.201 mmol and 0.044 mmol, were such, that in respect of the solid catalyst component A to be used in 1b, of which there was 78.1 mg, the molar ratios Al/Ti and Al/1.8-cineole were respectively 50 and 1.25.
1b. About 80 mg of component A of the catalyst, which was a tetravalent titanium compound supported on a MgCl₂ carrier was weighed into a 30 ml glass bottle provided with a septum cork and filled with inert gas (N₂). In addition, 1/3 of the solution prepared in 1a was added. The mixture was left at room temperature for about 10 minutes during light agitation, after which 0.3 g (0, 5 cm³) of 4 methyl-1-pentene (prepolymerizing monomer) was added. The mixture was left for 15 minutes during light agitation.

### 2. Carrying out the polymerization

In order to improve the mixing, 50 g of polymer was added to a 4 dm³ steel reactor equipped with an agitator, e.g. poly1-butene or polypropene, having a particle size between 0,2 and 0, 5 mm. The reactor was filled with nitrogen. Subsequently, the solution remaining from 1a above and the mixture prepared in 1b was added into the reactor. The mixing rate was adjusted to 200 rpm. The temperature of the reactor was raised to 55 C° and simultaneously a nitrogen flow was conducted through the reactor.

The pentane then was discharged in a gaseous form along with the nitrogen flow. When all the pentane had been discharged from the reactor in about 10 to 20 minutes, the feeding of nitrogen into the reactor was stopped and the outlet of the reactor was closed. After this hydrogen and nitrogen gas was added to the reactor in such amounts that the partial pressures were respectively 10 and 300 kPa. The mixing rate was adjusted to 400 rpm. After this, the introduction of 1-butene into the reactor along a heated feeding line was started so that the feeding rate was not too high during the pressure increase. Thus the 1-butene was prevented from being liquefied. The partial pressure of the 1-butene was raised to 500 kPa for the duration of the polymerization. Thus, the total pressure during the polymerization was 810 kPa. The polymerization was continued for 3 hours, after which the rotation rate of the agitators was reduced to 200 rpm, the 1-butene feeding line was closed and the discharge line of the reactor was opened, while washing the product simultaneously with nitrogen gas. The reactor was opened and the product removed for characterization.

### EXAMPLE 2

The same proceeding as in example 1 was adopted for preparing the catalyst and the polymer, however, triethylaluminium (TEA) was used as the organic aluminium compound B instead of tri-isobutyl aluminium.

### EXAMPLES 3 TO 6

The proceeding of example 1 was repeated, however using 20, 50, 5 and 2.5 kPa as the partial hydrogen pressure in the polymerization.

### EXAMPLE 7

The proceeding of example 1 was repeated, but instead of 1.8 cineole diphenyldimethoxysilane (DPDMS) was used as stereospecific compound. The amounts of the compounds B and C were such that the molar ratios Al/Ti and A1/DPDMS with regard to the component A to be used in 1b were respectively 200 and 20.

### EXAMPLES 8 to 11

The proceeding of example 7 was repeated, however, 20, 50, 5 and 2.5 kPa respectively were used as the partial hydrogen pressure in the polymerization.

### COMPARATIVE EXAMPLE 1

### 1. Preparations

C. 80 mg of the same solid component A of the catalyst as in example 1 was weighed into a glass bottle filled with inert gas (N₂) and equipped with a septum cork, 40 ml of n-pentane dried on molecular sieves, as well as the desired amounts of organic aluminium compound B (=tri-isobutylaluminium, TIBA) and the stereospecific compound C (=1.8 cineole) were added. The solution was left standing for 5 minutes. The amounts of the compounds B and C were such that the molar ratios Al/Ti and Al/1.8 cineole were respectively 50 and 1.25 with respect to the solid catalyst component A.

### 2. Carrying out the polymerization

In order to improve the mixing, 50 g of polymer, e.g. poly-1-butene or polypropene having a particle size between 0.2 and 0.5 mm was introduced into a 4 dm³ steel reactor equipped with an agitator. The reactor was filled with nitrogen. Subsequently, the catalyst mixture prepared in the preparations was added into the reactor. The mixing rate was adjusted to 200 rpm. The temperature of the reactor was raised to 55 °C, while simultaneously conducting nitrogen through the reactor. The pentane was discharged in a gaseous form along with the nitrogen flow. All the pentane having been discharged from the reactor during about 10 to 20 min., the feeding of nitrogen was stopped and the outlet of the reactor was closed. After this, hydrogen and nitrogen gas was added into the reactor in such an amount that the partial pressures were respectively 10 and 300 kPa. The mixing rate was adjusted to 400 rpm. After that, the adding of 1-butene into the reactor along a heated feeding line was started, so that the feeding rate was not too high during the pressure increase. Thus, the 1-butene was prevented from being liquefied. The partial pressure of the 1-butene was raised to 500 kPa for the duration of the polymerization. The total pressure during the polymerization was thus 810 kPa. The polymerization was continued for 3 h, after which the mixing rate was adjusted to 200 rpm. The feeding line of 1-butene was closed and the discharge line of the reactor was opened, while washing the product simultaneously with nitrogen gas. The reactor was opened and the product removed for characterization.

### COMPARATIVE EXAMPLES 2 AND 3

The proceeding of comparative example 1 was repeated, the partial pressure of hydrogen in the polymerization being however 5 and 2,5 kPa and the polymerization temperature 50 °C.

### COMPARATIVE EXAMPLE 4

The procedure of comparative example 1 was repeated, however using diphenyldimethoxysilane DPDMS as stereospecific compound C instead of 1.8 cineole. The amounts of the compounds B and C were such that the molar ratios Al/Ti and Al/DPDMS were respectively 200 and 20 with regard to the solid catalyst component A to be used. The partial pressure of hydrogen in the polymerization was 20 kPa and the polymerization period 4 h.

### COMPARATIVE EXAMPLE 5

The proceeding of comparative example 4 was repeated, the partial pressure of the hydrogen being however 5 kPa, the polymerization period 3 h and the polymerization temperature 65°C.

### COMPARATIVE EXAMPLE 6

The proceeding of comparative example 4 was repeated, the partial pressure of hydrogen in the polymerization however being 2 kPa.

### COMPARATIVE EXAMPLE 7

The preparations of comparative example 1 were repeated, however the polymerization was done as in example 19. The polymerization period was 2 h and the polymerization temperature was 20 to 85°C. The polymer thus formed had the shape of an integral lump in the reactor.

### COMPARATIVE EXAMPLE 8

The proceeding of comparative example 1 was repeated, however performing the polymerization as in example 19. The polymerization period was 3 h and the polymerization temperature 20 to 28°C.

### COMPARATIVE EXAMPLE 9

The prepolymerization was carried out by using 1-butene as monomer and n-pentane as inert medium. The prepolymerization temperature was 20°C. The prepolymerized catalyst formed a paste-like product in the medium and was not polymerizable.

### COMPARATIVE EXAMPLE 10

The prepolymerization was carried out by using propene as monomer and heptane as inert medium. The prepolymerization temperature was 40°C and the total pressure 20 kPa. Diphenyldimetoxysilane DPDMS was used as the stereospecific compound C. The amounts of the compounds B and C were such that the molar ratios Al/Ti and Al/DPDMS were respectively 4 and 0,4 with regard to the used solid catalyst component A. The prepolymerization period was 1 h. A 2.4-fold amount of the monomer was used with regard to the weight of the catalyst in the prepolymerization. The prepolymerized catalyst was dried before the polymerization in the nitrogen flow. The polymerization was performed as in the comparative example 1. The amount of the compound B was such, that the molar ratio Al/Ti was 200 with regard to the used solid component A. The stereospecific compound C was not used in the polymerization. The partial pressure of the hydrogen in the polymerization was 20 kPa and the polymerization period was 4h.

### COMPARATIVE EXAMPLE 11

The procedure of comparative example 1 was repeated, however triethylaluminium (TEA) was used as the organic aluminium compound B instead of tri-isobutylaluminium and diphenyldimethoxysilane (DPDMS) as the stereospecific compound C.

**Table 1**

| Results of the polymerization tests according to the invention | | | | | | |
|---|---|---|---|---|---|---|
| Example no | Activity (x) kgPB/gTi | Crystallinity (x) % | Isotacticity (x) % | Melt index (x) g/10 min | Bulk density (x) g/cm³ | Chloride concentrat (x) mg/kg |
| 1 | 386 | 55.3 | 99.0 | 0.12 | 0.41 | 44 |
| 4 | 85 | 53.1 | 97.7 | 9.5 | 0.38 | 201 |
| 5 | 284 | 52.7 | 98.9 | 0.13 | 0.39 | 60 |
| 6 | 208 | 40.4 | 98.9 | 0.04 | 0.39 | 82 |
| 7 | 171 | 48.2 | 94.8 | 2.3 | 0.40 | 100 |
| 8 | 184 | 54.5 | 98.6 | 8.1 | 0.41 | 92 |
| 9 | 140 | 71.2 | 95.7 | 57 | 0.40 | 122 |
| 10 | 123 | 49.2 | 95.6 | 1.1 | 0.38 | 138 |
| 11 | 109 | 52.0 | 96.7 | 0.30 | 0.41 | 156 |

**Table 2**

| Results of the comparative tests | | | | | | |
|---|---|---|---|---|---|---|
| Compar. example no | Activity (x) kgPB/gTi | Crystallinity (x) % | Isotacticity (x) % | Melt index (x) g/10 min | Bulk density (x) g/cm³ | Chloride concentration (x) mg/kg |
| 1 | 127 | 37.3 | 98.9 | - | 0.37 | 133 |
| 2 | 41 | 31.3 | 96.5 | 0.01 | 0.41 | 438 |
| 3 | 131 | 44.7 | 99.7 | 0.04 | 0.39 | 130 |
| 4 | 107 | 44.8 | 91.1 | 8.3 | 0.31 | 158 |
| 5 | 75 | 55.6 | 95.1 | 1.8 | 0.30 | 228 |
| 6 | 70 | 51.5 | 97.1 | 0.65 | 0.36 | 244 |
| 7 | 431 | 30.9 | 98.9 | 0.18 | - | 39 |
| 8 | 67 | 41.6 | 94.8 | 0.18 | - | 254 |
| 9 | - | - | - | - | - | - |
| 10 | 177 | 58.0 | 94.5 | 49 | 0.40 | 95 |
| 11 | 104 | 55.1 | 87.6 | 270 | 0.44 | 162 |
| (x) The properties presented in the tables have been determined in the following manners. | | | | | | |
| Activity: the total amount of the polymer prepared divided by the amount of titanium contained in the catalyst used in the polymerization (unit: kg of polymer/g of titanium). | | | | | | |
| Crystallinity: relative proportion of the melting enthalpy of the stable crystal form I of the polymer (cf. Choi, S.Y., Rakus, J.P. and O'Toole, Polym. eng. Sci, August (1966), p. 349) with regard to the melting enthalpy of completely crystalline polymer 125 J/g (%). | | | | | | |
| Isotacticity: relative proportion of the polymer which is insoluble in diethylether with regard to the total amount of polymer (%). | | | | | | |
| Melt index: According to Standard ASTM 1238-85. Measuring conditions: 2.16 kg of mass, temperature 190°C, melt density 0.797 g/cm³ (g/10 min.). | | | | | | |
| Bulk density: According to Standard ASTM 1895-69 (g/cm³). | | | | | | |
| Chloride concentration: Calculated by means of the polymer yield, as it is known that the unpolymerized catalyst contained 46% by weight of chlorine (mg of chlorine/kg of polymer = ppm) | | | | | | |

## Claims

1. A method for preparing a 1-butene polymer, which is a homopolymer, or a copolymer containing 1-butene units and less than 10% of units derived from other unsaturated monomers, wherein 1-butene or its mixture with other monomers is, in the presence of an electron donor and optionally hydrogen, polymerized in gas phase by means of a Ziegler-Natta catalyst composition, which is obtained by prepolymerizing a premonomer with a combination of: a solid catalyst component supported on a MgCl₂ carrier and containing a tetravalent titanium halide, an aluminium tri(C₁-C₁₀)-alkyl cocatalyst and a stereospecific electron donor having at least one hetero atom, characterised in that the prepolymerization has been carried out in liquid state at room temperature using as the premonomer a liquid monoethylenically unsaturated C₅-C₁₂-hydrocarbon and using a premonomer/catalyst weight ratio of between 0,1 and 200 and an aluminium tri(C₁-C₁₀)-alkyl cocatalyst/stereospecific electron donor molar ratio of between 1 and 500.

2. A method of claim 1 characterised in that the Ti halide is TiCl₄.

3. A method of claim 1 or 2 characterised in that 4-methyl-1-pentene is prepolymerized.

4. A method of claim 1, 2 or 3 characterised in that 1,8-cineole is used as the electron donor.

5. A catalyst composition suitable for the polymerisation of 1-butene, which catalyst composition has been obtained by polymerizing a premonomer with a combination of: a solid catalyst component supported on a MgCl₂ carrier and containing a tetravalent titanium halide; an aluminium tri(C₁-C₁₀)-alkyl cocatalyst; and a stereospecific electron donor having at least one hetero atom, characterised in that the prepolymerization has been carried out in liquid state at room temperature using as the premonomer a liquid monoethylenically unsaturated C₅-C₁₂-hydrocarbon and using a premonomer/catalyst weight ratio of between 0,1 and 200 and an aluminium tri(C₁-C₁₀)-alkyl cocatalyst/stereospecific electron donor molar ratio of between 1 and 500.

6. A catalyst composition of claim 5 characterised in that Ti halide is TiCl₄.

7. A catalyst composition of claim 5 or 6 characterised in that 4-methyl-pentene is prepolymerized.

8. A catalyst composition of claims 5, 6 or 7 characterised in that the electron donor is 1,8-cineole.

## Patentansprüche

1. Verfahren zur Herstellung eines 1-Butenpolymers, das ein Homopolymer oder ein Copolymer ist, das 1-Buteneinheiten und weniger als 10 % Einheiten, abgeleitet von anderen ungesättigten Monomeren, enthält, wobei 1-Buten oder sein Gemisch mit anderen Monomeren in der Gasphase in der Anwesenheit eines Elektronendonors und gegebenenfalls Wasserstoff polymerisiert wird mittels einer Ziegler-Natta-Katalysatorzusammensetzung, die erhalten wird durch Präpolymerisation eines Prämonomeren mit einer Kombination aus: einer festen Katalysatorkomponente, die sich auf einem MgCl₂-Träger befindet und ein tetravalentes Titanhalogenid enthält, einem Aluminium-tri(C₁-C₁₀)-alkyl-Cokatalysator und einem stereospezifischen Elektronendonor, der mindestenss ein Heteroatom besitzt,
**dadurch gekennzeichnet,**
daß die Präpolymerisation im flüssigen Zustand bei Raumtemperaturdurchgeführt worden ist, wobei als Prämonomer ein flüssiger monoethylenisch ungesättigter C₅-C₁₂-Kohlenwasserstoff unter Anwendung eines Prämonomer/Katalysator-Gewichtsverhältnisses zwischen 0,1 und 200 und eines Aluminium-tri(C₁-C₁₀)-alkyl-Cokatalysator/stereospezifischer Elektronendonor-Molverhältnisses zwischen 1 und 500 verwendet worden ist.

2. Verfahren nach Anspruch 1, dadurch gekennzeichnet, daß das Ti-Halogenid TiCl₄ ist.

3. Verfahren nach Anspruch 1 oder 2, dadurch gekennzeichnet, daß 4-Methyl-1-penten präpolymerisiert wird.

4. Verfahren nach Anspruch 1, 2 oder 3, dadurch gekennzeichnet, daß 1,8-Cineol als der Elektronendonor verwendet wird.

5. Katalysatorzusammensetzung geeignet für die Polymerisation von 1-Buten, wobei die Katalysatorzusammensetzung erhalten worden ist durch Polymerisieren eines Prämonomers mit einer Kombination von: einer festen Katalysatorkomponente, die sich auf einem MgCl₂-Träger befindet und ein tetravalentes Titanhalogenid enthält, einem Aluminium-tri(C₁-C₁₀)-alkyl-Cokatalysator; und einem stereospezifischen Elektronendonor, der mindestens 1 Heteroatom besitzt,
**dadurch gekennzeichnet,**
daß die Präpolymerisation in flüssigem Zustand bei Raumtemperatur unter Verwendung eines flüssigen monoethylenisch ungesättigten C₅-C₁₂-Kohlenwasserstoffs als Prämonomer und unter Anwendung eines Prämonomer/Katalysator-Gewichtsverhältnisses zwischen 0,1 und 200 und eines Aluminiumtri-(C₁-C₁₀)-alkyl-Cokatalysator/stereospezifischer Elektronendonor-Molverhältnisses zwischen 1 und 500 durchgeführt worden ist.

6. Katalysatorzusammensetzung nach Anspruch 5, dadurch gekennzeichnet, daß das Ti-Halogenid TiCl₄ ist.

7. Katalysatorzusammensetzung nach Anspruch 5 oder 6, dadurch gekennzeichnet, daß 4-Methyl-penten präpolymerisiert wird.

8. Katalysatorzusammensetzung nach den Ansprüchen 5, 6 oder 7, dadurch gekennzeichnet, daß der Elektronendonor 1,8-Cineol ist.

## Revendications

1. Procédé de préparation d'un polymère de butène-1 qui est un homopolymère ou un copolymère contenant des motifs butène-1 et moins de 10% de motifs provenant d'autres monomères insaturés, le butène-1 ou ses mélanges avec d'autres monomères étant, en présence d'un donneur d'électron et éventuellement d'hydrogène, polymérisé en phase gazeuse au moyen d'une composition de catalyseur Ziegler-Natta qui est obtenue par prépolymérisation d'un prémonomère en présence d'une combinaison de: un composant catalyseur solide supporté sur un support de MgCl₂ et contenant un halogénure de titane tétravalent, un cocatalyseur de tri(alkyl en C₁-C₁₀)-aluminium et un donneur d'électron stéréospécifique renfermant au moins un hétéroatome, caractérisé en ce que la prépolymérisation a été mise en oeuvre à l'état liquide à la température ambiante en utilisant comme prémonomère un hydrocarbure en C₅-C₁₂ monoéthyléniquement insaturé et en utilisant un rapport pondéral prémonomère/catalyseur compris entre 0,1 et 200 et un rapport molaire cocatalyseur de tri(alkyl en C₁-C₁₀)-aluminium/donneur d'électron stéréospécifique compris entre 1 et 500.

2. Procédé selon la revendication 1 caractérisé en ce que l'halogénure de titane est le TiCl₄.

3. Procédé selon la revendication 1 ou 2 caractérisé en ce que 12'on prépolymérise le 4-méthyl-1-pentène.

4. Procédé selon la revendication 1, 2 ou 3, caractérisé en ce que l'on utilise comme donner d'électron le 1,8-cinéole.

5. Une composition de catalyseur convenant à la polymérisation de 1-butène, cette composition du catalyseur ayant été obtenue par prépolymérisation d'un prémonomère en présence d'une combinaison de: un composant catalyseur solide supporté sur un support de MgCl₂ et contenant un halogénure de titane tétravalent, un cocatalyseur de tri(alkyl en C₁-C₁₀)-aluminium et un donneur d'électron stéréospécifique renfermant au moins un hétéroatome, caractérisé en ce que la prépolymérisation a été mise en oeuvre à l'état liquide à la température ambiante en utilisant comme prémonomère un hydrocarbure en C₅-C₁₂ monoéthyléniquement insaturé et en utilisant un rapport pondéral prémonomère/catalyseur compris entre 0,1 et 200 et un rapport molaire cocatalyseur de tri(alkyl en C₁-C₁₀)-aluminium/donneur d'électron stéréospécifique compris entre 1 et 500.

6. Une composition de catalyseur selon la revendication 5, caractérisée en ce que l'halogénure de Ti est le TiCl₄.

7. Une composition de catalyseur selon la revendication 5 ou 6, caractérisée en ce que l'on prépolymérise le 4-méthyl-pentène.

8. Une composition de catalyseur selon les revendications 5, 6 ou 7, caractérisée en ce que le donneur d'électron est le 1,8-cinéole.
